# EUROPÄISCHE PATENTSCHRIFT

(11) **EP 1 818 478 B1**
(45) Veröffentlichungstag und Bekanntmachung des Hinweises auf die Patenterteilung: **24.02.2010**
(21) Anmeldenummer: 07001221.6
(22) Anmeldetag: 20.01.2007
(51) Int. Cl.: E04F 15/02, F16B 5/00

(54) **Einrichtung bestehend aus zwei Bauplatten und einem Federelement aus Federstahl zum Verriegeln der Bauplatten**
System consisting of two building panels and a tongue element made from spring steel for locking these panels
Ensemble consistant en deux panneaux de construction et une languette en acier à ressort pour verrouiller ces panneaux

(30) Priorität: 10.02.2006 DE 102006006124
(43) Veröffentlichungstag der Anmeldung: 15.08.2007
(73) Patentinhaber: Flooring Technologies Ltd., Portico Building Marina Street Pieta MSD 08 (MT)
(72) Erfinder:
(74) Vertreter: Rehmann, Thorsten

(56) Entgegenhaltungen:
- EP-A- 1 475 485
- EP-A1- 1 197 611
- EP-A1- 1 650 375
- WO-A-00/47841
- WO-A-2005/054599
- WO-A-2006/043893

## Beschreibung

Die Erfindung betrifft eine Einrichtung bestehend aus zwei miteinander verbindbaren Bauplatten und aus einem Federelement zum Verriegeln der miteinander verbundenen Bauplatten in einer Richtung senkrecht zu der Sichtseite der Bauplatten wobei die erste Bauplatte eine erste Seitenkante (I) und eine erste im Kern dieser Bauplatte vorgesehene, parallel zur Sichtseite verlaufende Nut aufweist, wobei die zweite Bauplatte eine zweite Seitenkante (II) und eine zweite im Kern dieser Bauplatte vorgesehene, parallel zur Sichtseite verlaufende Nut aufweist und wobei das Federelement in die erste Nut der ersten Bauplatte eingesetzt ist, um selbsttätig in die zweite Nut der zweiten Bauplatte einzuschnappen, wenn beim Verbinden der beiden Bauplatten durch eine vertikale Absenkbewegung beide Nuten zur Überdeckung gelangen, wobei zur Verriegelung der beiden Bauplatten in einer zur Sichtseite parallelen Richtung an die erste Seitenkante (I) eine über diese seitlich hervorstehende untere Lippe mit einem äußeren, nach oben hervorstehenden Vorsprung und an der der ersten Seitenkante (I) gegenüberliegenden zweiten Seitenkante (II) eine zu einer Unterseite gerichtete Ausnehmung vorgesehen ist, die zum Vorsprung korrespondierend ausgestaltet ist.

Eine solche Einrichtung ist beispielsweise aus der WO 2005/054599 A1 bekannt. Diese Verriegelungseinrichtung ist an der Querseite von Bodenpaneelen vorgesehen. Zusätzlich zu dieser Verriegelungseinrichtung ist an der Querseite eine hakenförmige Profilierung ausgebildet, so dass zwei Paneele mit ihren Seitenkanten ineinander haken können und dadurch in einer parallel zur Oberseite verlaufenden Richtung verriegelt sind. An der Längsseite sind die Paneele mit einer selbst verriegelnden Feder/Nut-Profilierung versehen. Beim Verlegen wird das neu an dem bereits verlegten Paneelverbund anzulegende Paneel zunächst an der Längsseite mit einem bereits ausgelegten Paneel durch Einwinkeln der Feder in die Nut verbunden und dann in der winkeligen Lage in Richtung der Seitenkante des vorher verlegten Paneels in derselben Reihe geschoben und dort abgesenkt. Die hakenförmige Profilierung greift ineinander und das Federelement schnappt dann in das neu angelegte Paneel ein.

Das bekannte Federelement ist aus Kunststoff ausgebildet und an seiner Oberseite abgeschrägt. Ähnlich einem Türschnapper wird durch die Schräge das Federelement von dem neu anzusetzenden Paneel nach innen in die Nut hineingedrückt, wenn dieses mit seiner Unterseite auf die Abschrägung auftrifft und weiter abgesenkt wird. Für die Fertigung dieses Federelementes sind spezielle Spritzgusswerkzeuge notwendig, so dass die Herstellung relativ teuer ist. Des Weiteren muss ein hochwertiger Kunststoff verwendet werden, um ausreichende Festigkeitswerte zur Verfügung zu stellen, was das Federelement weiter verteuert. Werden Kunststoffe mit zu geringen Festigkeitswerten verwendet, führt dies zu relativ großen Abmaßen der Federelemente, da nur dadurch gewährleistet ist, dass entsprechende Kräfte erzeugt bzw. übertragen werden können.

In der nachveröffentlichten WO 2006/043893 A1 und der ebenfalls nachveröffentlichten EP 1 650 375 A1 wird offenbart, Bodenpaneele mit einem flexiblen Verriegelungselement zu verbinden, welches in Aussparungen in beiden zu verbindenden Platten eingreift.

In der WO 00/47841 ist ein federndes Element offenbart, das zwei über ein Nut- und Federprofil verbundene Paneele verriegelt und die Verbindung unter Spannung hält.

Aus der EP 1 475 485 A2 ist ein federndes Element bekannt, das auf zwei verbundene Paneele eine Kraft überträgt und sie so in vertikaler Richtung verriegelt.

Die EP 1 197 611 A1 offenbart Fußbodenplatten, die über Formfedern miteinander verbunden werden können. Dabei werden die Formfedern mittels Verriegelungsbolzen an den Unterseiten der zu verbindenden Paneele befestigt.

Von dieser Problemstellung ausgehend soll die eingangs erläuterte Einrichtung verbessert werden.

Zur Problemlösung zeichnet sich eine gattungsgemäße Einrichtung zum Verriegeln dadurch aus, dass das Federelement aus einem sinusförmig gebogenen Federstahl mit einer Vielzahl von Wellenbögen besteht.

Die Herstellung dieses Federelementes ist wesentlich einfacher und dadurch kostengünstiger. Es kann handelsüblicher Federdraht verwendet werden, der in entsprechender Länge von der Rolle geschnitten und gebogen wird. Die übertragbaren Kräfte sind bei gleicher Dimensionierung gegenüber dem bekannten Federelement wesentlich höher. Dadurch kann die Stärke des Federelementes reduziert werden, so dass auch dünne Bauplatten, insbesondere Fußbodenpaneele, mit der Verriegelungseinrichtung versehen werden können, ohne dass durch die Einfräsung der Nuten in den Kern die Bauplatte an den Seitenkanten zu stark geschwächt wird, wodurch die Beschädigungsgefahr beim Transport reduziert wird.

Das Federelement weist vorzugsweise im Wesentlichen dieselbe Länge wie die Nut auf. Dadurch werden die Verriegelungsstellen zweier Bauplatten, bezogen auf die Festigkeit optimiert. Das Federelement liegt jeweils abwechselnd mit dem Wellental am Grund der Nut der ersten Bauplatte an und schnappt mit dem Wellenberg in die Nut der anderen Bauplatte.

Das Federelement ist vorzugsweise werksseitig in die Nut eingesetzt. Um ein Herausfallen aus der Nut zu verhindern, ist das Federelement, insbesondere vorzugsweise an einem Ende der Nut arretiert. Die Arretierung kann durch Verkleben oder durch Abwinkeln des Endes des Drahtes und Einschlagen in den Nutgrund bzw. Einstecken in eine im Nutgrund vorgesehen Bohrung erfolgen.

Wenn die Wandung der gegenüberliegender Seitenkante unterhalb der Nut nach innen abgeschrägt verläuft, wird der Federdraht auf einfache Weise mittels des sich absenkenden Paneels in die Nut, in der er befestigt ist, gezwungen und damit vorgespannt. Dabei wird der Wellenbogen, auf den das Paneel auftrifft, in seiner Form flacher, wodurch eine Längenzunahme des Bogens bewirkt wird und das Federelement in Richtung der Nut verschoben wird.

Wenn die Wandung unterhalb der Nut, in die das Federelement einschnappen soll, in einem ersten Bereich zunächst parallel zur Wandung zurückspringt und dann nach innen abgeschrägt verläuft, ermöglicht dies ein optimales Verdrängen des Federelementes beim Abwinkeln.

Das Einschnappen des Federelementes wird erleichtert, wenn die untere Wandung der Nut (Unterlippe) zur Nutöffnung hin geneigt verläuft. Der Neigungswinkel beträgt 2° bis 5°, vorzugsweise 3°.

Mit Hilfe einer Zeichnung sollen Ausführungsbeispiele der Erfindung nachfolgend näher beschrieben werden:

Es zeigt:
- Figur 1: die Seitenansicht zweier zu verbindender Bauplatten in einer ersten Stellung in Teilansicht,
- Figur 2: die Seitenansicht zweier zu verbindender Bauplatten in einer zweiten Stellung in Teilansicht;
- Figur 3: die Seitenansicht zweier zu verbindender Bauplatten in einer dritten Stellung in Teilansicht;
- Figur 4: die Seitenansicht zweier miteinander verbundener und in zwei Richtungen verriegelter Bauplatten in Teilansicht;
- Figur 5a: die Draufsicht auf eine Bauplatte;
- Figur 5b: die Draufsicht auf eine Bauplatte;
- Figur 6: die perspektivische Darstellung eines teilweise verlegten Verbundes;
- Figur 7: die Darstellung nach Figur 1 bei einer weiteren Ausführungsform.

Die Bauplatte ist vorzugsweise ein Fußbodenpaneel mit einem Kern 14 aus Holzwerkstoff (MDF oder HDF) oder einem Holzwerkstoff-Kunststoff-Gemisch. Auf den Kern 14 kann als Sichtseite 3 eine Dekorschicht mit beispielsweise einer Holzmaserung aufgeklebt bzw. mit dem Kern 14 verpresst sein oder das Dekor kann unmittelbar auf die Sichtseite 3 aufgedruckt sein. An den sich gegenüberliegenden Seitenkanten I, II ist in derselben horizontalen Ebene je eine parallel zur Sichtseite 3 verlaufende Nut 5, 6 in den Kern 14 eingefräst. Die Nuten 5, 6 können gleich tief oder - wie die Figuren zeigen - unterschiedlich tief ausgebildet sein. In die tiefere Nut 5 ist ein im Wesentlichen über die volle Länge L der Nut 5 reichendes sinusförmig gebogenes Federelement 10 aus Federstahl mit einer Vielzahl von Wellenbögen 12 eingelegt und mit einem Ende in der Nut 5 befestigt. Die Seitenkanten I, II sind hakenförmig profiliert, so dass zwei miteinander verbundene Paneele 1, 2 in horizontaler Richtung H verriegelt werden. Hierzu ist an der Unterseite 4 an einer Seitenkante I eine über die Seitenkante I seitlich hervorstehende untere Lippe 11 vorgesehen, die einen äußeren, nach oben hervorstehenden Vorsprung 7 aufweist. An der gegenüberliegenden Seitenkante II ist eine zu dem Vorsprung 7 korrespondierende Ausnehmung 8 angeordnet. Die Ausnehmung 8 ist abgestuft, so dass das Paneel 2 auf der Unterlippe 11 des Paneels 1 aufliegt und die Paneele 1, 2 in vertikaler Richtung V abgestützt sind.

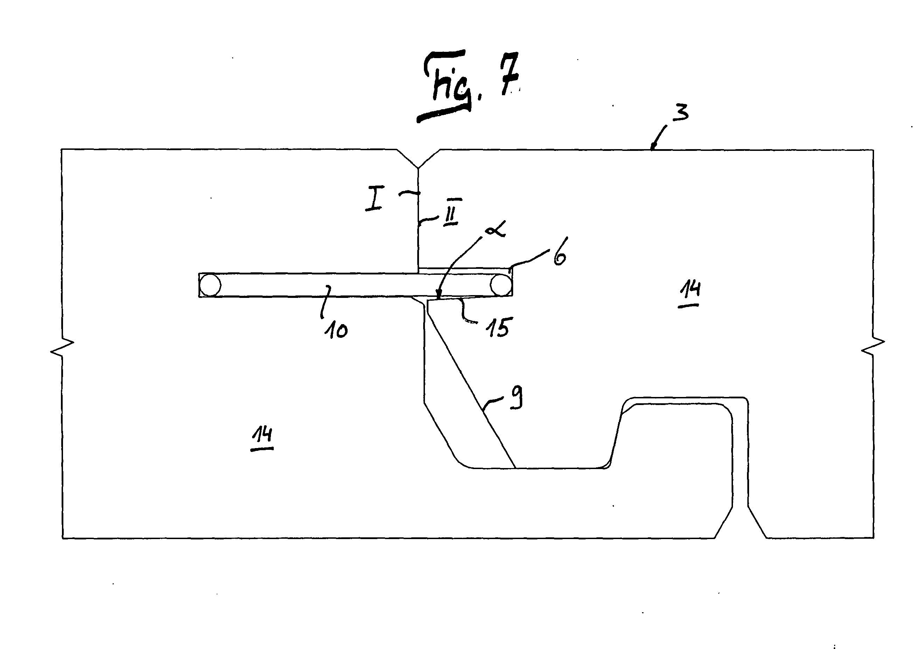

Unterhalb der Nut 6 verläuft die Wandung 9 zur Unterseite 4 hin nach innen schräg. Ein kurzer Bereich an der Wandung 9 beginnt unterhalb der Nut 6 zunächst senkrecht zur Sichtseite 3 aber gegenüber der Wandung 13 oberhalb der Nut 6 zurückversetzt, bevor die Seitenkante II in die geneigt verlaufende Wandung 9 übergeht. Wie Figur 7 zeigt, kann die untere Wandung 15 der Nut 6 im Winkel α, der vorzugsweise 3° beträgt, zur Sichtseite 3 hin geneigt verlaufen.

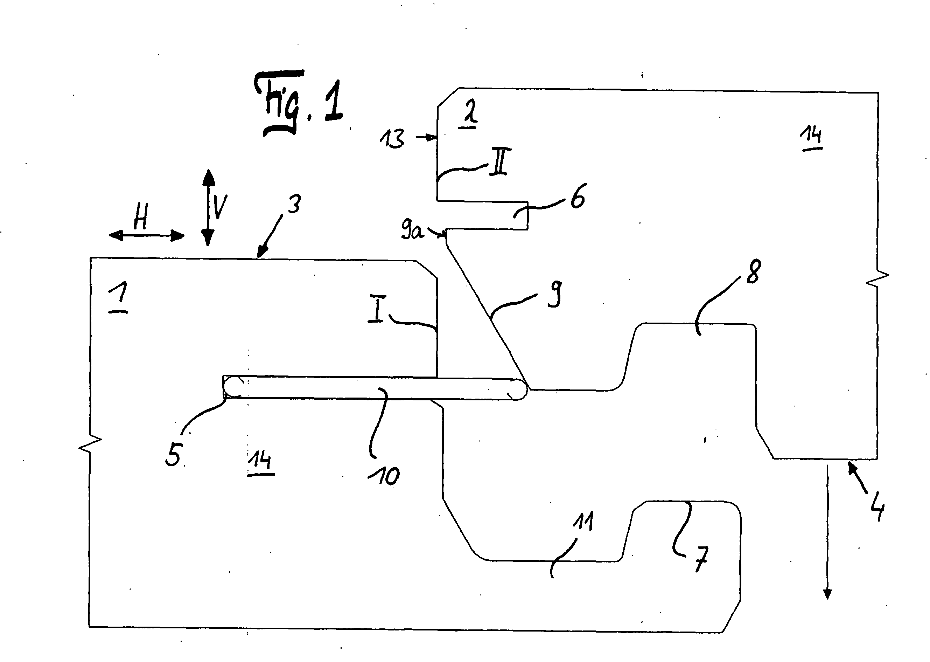

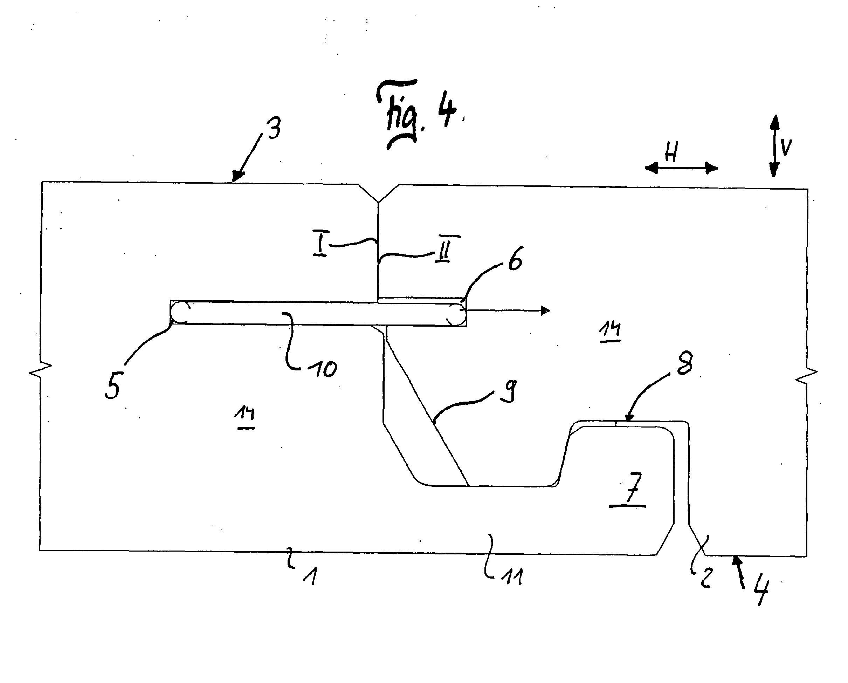

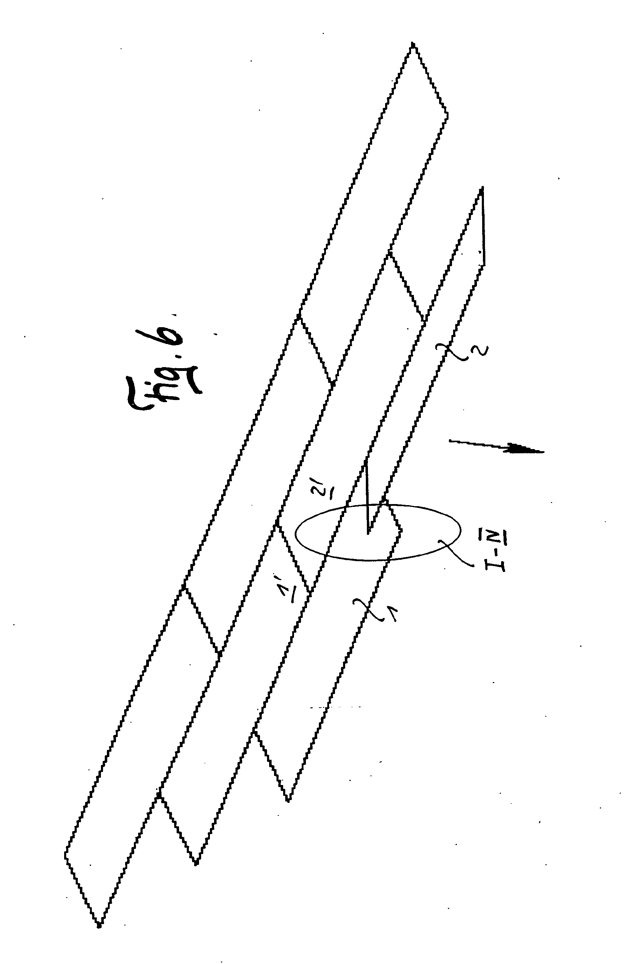

Figur 6 verdeutlicht in Verbindung mit Figuren 1 bis 4 die Art des Verbindens zweier Paneele 1, 2 an der Querseite:

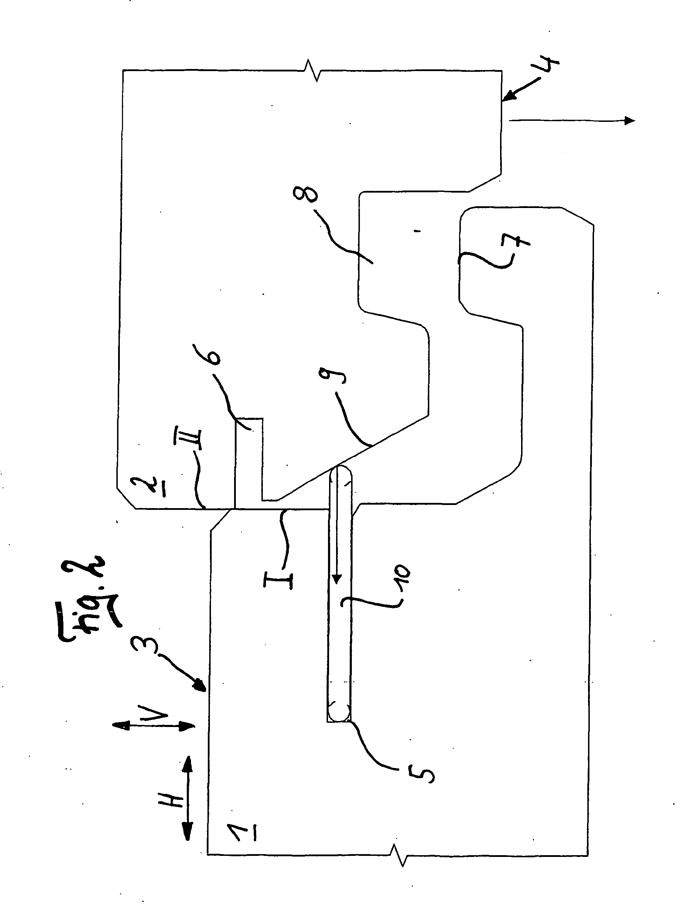

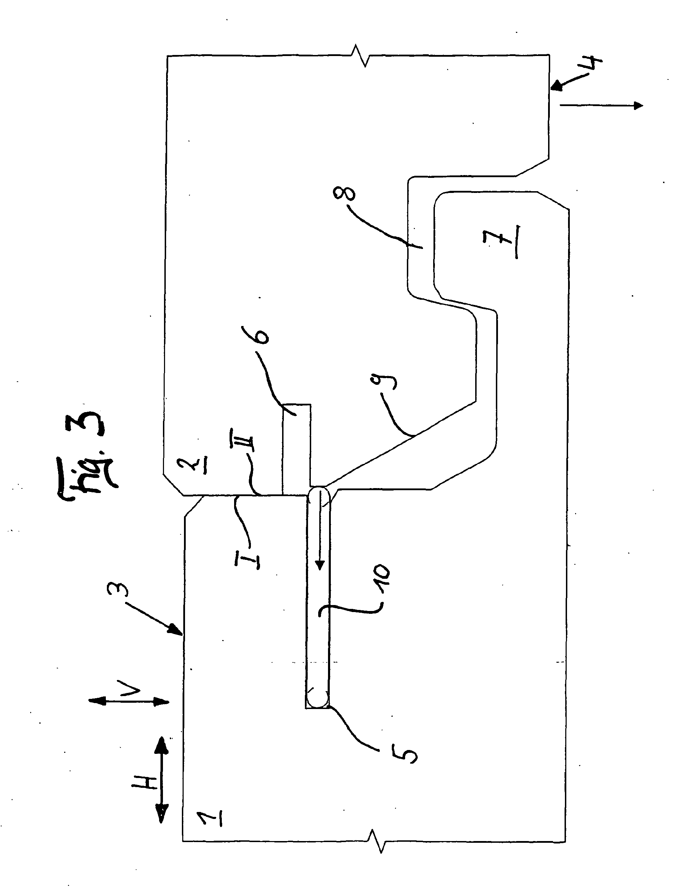

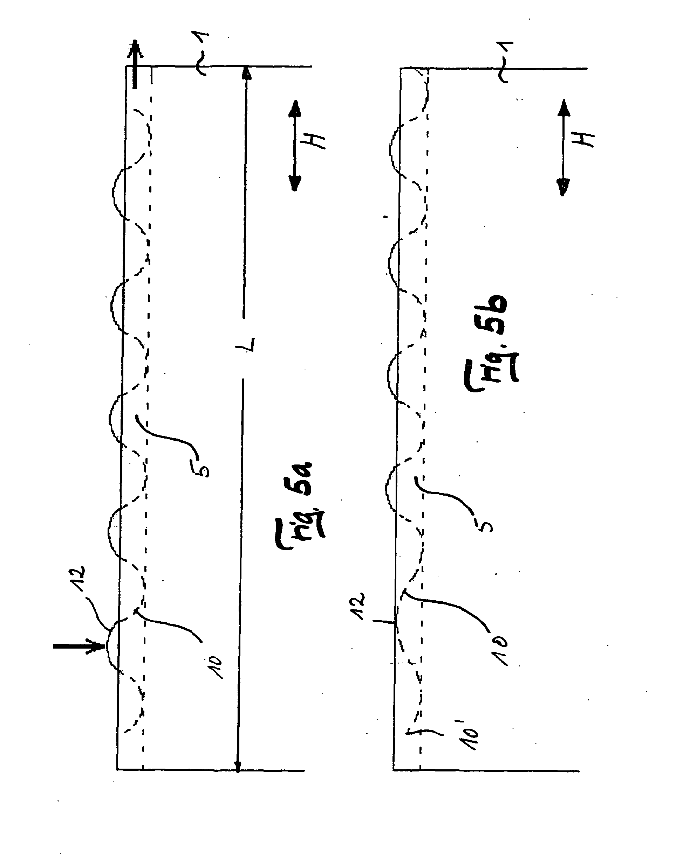

Zunächst wird ein Paneel 1, welches in seiner Nut 5 das gebogene Federelement 10 aufnimmt, mit Hilfe eines an seinen Längsseiten vorhandenen Feder/Nut-Profils längsseitig mit bereits zwei verlegten Paneelen 1', 2' verbunden und auf den Untergrund abgesenkt. Sodann wird ein weiteres Paneel 2, das über dasselbe Längsprofil verfügt, mit diesem in das Längsprofil des bereits verlegten Paneels 2' eingefügt aber noch nicht abgesenkt. Die Oberseite des Paneels 2 weist dabei einen Winkel von etwa 20° zu den Oberseiten der bereits verlegten Paneele 1', 2' auf. Dann wird das Paneel 2 in Längsrichtung H des ersten bereits abgesenkten Paneels 1 geschoben, bis seine Querseite am Übergang zur Oberseite in Kontakt mit der Seitenkante I des bereits verlegten Paneels 1 kommt. Dann wird das Paneel 2 abgewinkelt, wobei die Unterseite 4 in Kontakt mit dem Federelement 1 kommt (Figur 1) und beim weiteren Absenken des Paneels 2 das Federelement 10 durch die schräg verlaufende Wandung 9 der Seitenkante II in die Nut 5 geschoben wird (vgl. Figur 2). Bei weiterem Absenken stößt das Federelement 10 dann gegen den vertikal verlaufenden Bereich 9a an (vgl. Figur 3). Wie Figur 5b zeigt, ist dann der Wellenbogen 12 des Federelementes 10 vollständig in die Nut 5 eingetaucht, wodurch sich das Federelement 10 in Längsrichtung H verlängert. Da das Federelement 10 mit seinem Ende 10' in der Nut 5 befestigt ist, kann die Verlängerung des Federelementes 10 nur in einer Richtung, nämlich die Richtung erfolgen, in der die Paneele 1, 2 noch nicht vollständig miteinander verbunden sind. Beim weiteren Absenken des Paneels 2 kommt die Unterseite 4, bzw. die Wandungen 9, 9a mit dem nächsten Bogen 12 des Federelementes 10 in Kontakt, wobei der erste Bogen 12 zunächst abgeflacht bleibt, da ein Ausfedern aufgrund der Schrägstellung des Paneels 2 und damit auch der Nut 6 verhindert wird. Der nächste Bogen 12 wird analog zum ersten Bogen 12 des Federelementes 10 durch das sich abwärts bewegte Paneel 2 in die Nut 5 eingeschoben. Auch dieser Bogen 12 wird abgeflacht, was zum einen zur Erzeugung einer Federkraft und zum anderen zu einer weiteren Längenzunahme des Bogens 12 führt. Bei weiterem Herabschwenken des Paneels 2 werden die übrigen Bögen 12 des Federelementes 10 analog zu den beiden ersten Bögen 12 in die Nut 5 des Paneels 1 eingepresst. Bei Vollendung des Einwinkelvorganges schwenkt die Nut 6 des dritten Paneels in die Ebene des Federelementes 10 ein bzw. kommt vollständig zur Überdeckung mit der Nut 5, so dass die vorgespannten Drahtbögen 12 des Federelementes 10 nicht mehr von der Wandung 9a blockiert werden und in die Nut 6 des Paneels 2 ausfedern. Dieses Ausfedern geht mit einer Verkürzung des Federelementes 10 einher, das dann wieder seine ursprüngliche Form einnimmt (vgl. Figur 5a).

### Bezugszeichenliste:

- 1: Paneel/Bauplatte
- 1': verlegtes Paneel
- 2: Paneel/Bauplatte
- 2': verlegtes Paneel
- 3: Sichtseite
- 4: Unterseite
- 5: Nut
- 6: Nut
- 7: Vorsprung
- 8: Ausnehmung
- 9: schräge Wandung
- 9a: Wandung
- 10: Federelement
- 10': Ende
- 11: untere Lippe
- 12: Wellenbogen/Bogen
- 13: Wandung
- 14: Kern
- 15: Wandung
- I: Seitenkante
- II: Seitenkante
- H: horizontale Richtung/Richtung parallel zur Sichtseite/Längsrichtung
- L: Länge
- V: vertikale Richtung/Richtung senkrecht zur Sichtseite
- α: Winkel

## Patentansprüche

1. Einrichtung bestehend aus zwei miteinander verbindbaren Bauplatten (1,2) und aus einem Federelement (10) zum Verriegeln der miteinander verbundenen Bauplatten (1,2) in einer Richtung (V) senkrecht zu der Sichtseite (3) der Bauplatten (1,2) wobei die erste Bauplatte (1) eine erste Seitenkante (I) und eine erste im Kern (14) dieser Bauplatte (1) vorgesehene, parallel zur Sichtseite (3) verlaufende Nut (5) aufweist, wobei die zweite Bauplatte (2) eine zweite Seitenkante (II) und eine zweite im Kern (14) dieser Bauplatte (2) vorgesehene, parallel zur Sichtseite (3) verlaufende Nut (6) aufweist und wobei das Federelement (10) in die erste Nut (5) der ersten Bauplatte (1) eingesetzt ist, um selbsttätig in die zweite Nut (6) der zweiten Bauplatte (2) einzuschnappen, wenn beim Verbinden der beiden Bauplatten (1,2) durch eine vertikale Absenkbewegung beide Nuten (5,6) zur Überdeckung gelangen, wobei zur Verriegelung der beiden Bauplatten (1,2) in einer zur Sichtseite (3) parallelen Richtung (H) an die erste Seitenkante (I) eine über diese seitlich hervorstehende untere Lippe (11) mit einem äußeren, nach oben hervorstehenden Vorsprung (7) und an der der ersten Seitenkante (I) gegenüberliegenden zweiten Seitenkante (II) eine zu einer Unterseite (4) gerichtete Ausnehmung (8) vorgesehen ist, die zum Vorsprung (7) korrespondierend ausgestaltet ist, **dadurch gekennzeichnet, dass** das Federelement (10) aus einem sinusförmig gebogenen Federstahl mit einer Vielzahl von Wellenbögen (12) besteht.

2. Einrichtung nach Anspruch 1, **dadurch gekennzeichnet, dass** das Federelement (10) im Wesentlichen dieselbe Länge (L) wie die erste Nut (5) aufweist.

3. Einrichtung nach Anspruch 1 oder 2, **dadurch gekennzeichnet, dass** das Federelement (10) an einem Ende (10') in der ersten Nut (5) arretierbar ist.

4. Einrichtung nach Anspruch 1, **dadurch gekennzeichnet, dass** die Wandung (9) der zweiten Seitenkante (II) unterhalb der zweiten Nut (6) nach innen abgeschrägt verläuft.

5. Einrichtung nach Anspruch 4, **dadurch gekennzeichnet, dass** die Wandung unterhalb der zweiten Nut (6) in einem ersten Bereich (9a) zunächst parallel zur Wandung (13) oberhalb der zweiten Nut (6) zurückspringt.

6. Einrichtung nach einem oder mehreren der vorstehenden Ansprüche, **dadurch gekennzeichnet, dass** die untere Wandung (15) der zweiten Nut (6) zur Sichtseite (3) hin im Winkel α geneigt verläuft.

7. Einrichtung nach Anspruch 6, **dadurch gekennzeichnet, dass** der Winkel α im Bereich von 2° bis 5° liegt.

8. Einrichtung nach Anspruch 7, **dadurch gekennzeichnet, dass** der Winkel α 3° beträgt.

9. Einrichtung nach Anspruch 1, **dadurch gekennzeichnet, dass** die Bauplatten (1, 2) Bodenpaneele mit einem Kern (14) aus Holzwerkstoff oder einem Holzwerkstoff-Kunststoff-Gemisch sind.

## Claims

1. Device consisting of two building panels (1, 2) which can be connected to one another and a spring element (10) for locking the building panels (1, 2) which are connected to one another in a direction (V) perpendicular to the visible side (3) of the building panels (1, 2), wherein the first building panel (1) has a first side edge (I) and a first groove (5) provided in the core (14) of this building panel (1) and extending parallel to the visible side (3), wherein the second building panel (2) has a second side edge (II) and a second groove (6) provided in the core (14) of this building panel (2) and extending parallel to the visible side (3) and wherein the spring element (10) is inserted into the first groove (5) of the first building panel (1) to automatically snap into the second groove (6) of the second building panel (2) when on connection of the two building panels (1, 2) by a vertical lowering movement, the two grooves (5, 6) overlap, wherein to lock the two building panels (1, 2) in a direction (H) parallel to the visible side (3) onto the first side edge (I), a lower lip (11) projecting laterally beyond the latter with an outer, upwardly projecting projection (7) is provided and a recess (8) directed toward a lower side (4) is provided on the second side edge (II) opposing the first side edge (I) and is configured corresponding with the projection (7), **characterised in that** the spring element (10) consists of a sinusoidally curved spring steel with a large number of wave arches (12).

2. Device according to claim 1, **characterised in that** the spring element (10) has substantially the same length (L) as the first groove (5).

3. Device according to claim 1 or 2, **characterised in that** the spring element (10) can be blocked at one end (10') in the first groove (5).

4. Device according to claim 1, **characterised in that** the wall (9) of the second side edge (II) slopes inwardly below the second groove (6).

5. Device according to claim 4, **characterised in that** the wall under the second groove (6) in a first region (9a) firstly springs back parallel to the wall (13) above the second groove (6).

6. Device according to one or more of the preceding claims, **characterised in that** the lower wall (15) of the second groove (6) extends inclined at an angle α toward the visible side (3).

7. Device according to claim 6, **characterised in that** the angle α is in the range of 2° to 5°.

8. Device according to claim 7, **characterised in that** the angle α is 3°.

9. Device according to claim 1, **characterised in that** the building panels (1, 2) are floor panels with a core (14) made of wood-based material or a wood-based material/plastics material mixture.

## Revendications

1. Ensemble consistant en deux panneaux de construction (1, 2) pouvant être reliés ensemble et un élément ressort (10) pour verrouiller, dans une direction (V) perpendiculaire à la face visible (3) des panneaux de construction (1, 2), les panneaux de construction (1, 2) reliés ensemble, le premier panneau de construction (1) présentant un premier bord latéral (I) et une première rainure (5) s'étendant parallèlement à la face visible (3) et prévue dans l'âme (14) de ce panneau de construction (1), le deuxième panneau de construction (2) présentant un deuxième bord latéral (II) et une deuxième rainure (6) s'étendant parallèlement à la face visible (3) et prévue dans l'âme (14) de ce panneau de construction (2), et l'élément ressort (10) étant inséré dans la première rainure (5) du premier panneau de construction (1) pour se bloquer automatiquement par encliquetage dans la deuxième rainure (6) du deuxième panneau de construction (2) quand les deux rainures (5, 6) parviennent à un recouvrement lors de la liaison des deux panneaux de construction (1, 2) par un mouvement d'abaissement vertical, et il est prévu pour le verrouillage des deux panneaux de construction (1, 2) dans une direction (H) parallèle à la face visible (3), sur le premier bord latéral (I) une lèvre (11) inférieure faisant saillie latéralement au-delà de celui-ci et comprenant un bossage (7) extérieur faisant saillie vers le haut, et sur le deuxième bord latéral (II) opposé au premier bord latéral (I) un évidement (8) dirigé vers une face inférieure (4) et qui est arrangé pour correspondre au bossage (7), **caractérisé en ce que** l'élément ressort (10) consiste en un acier à ressort plié en forme sinusoïdale, comprenant plusieurs ondulations.

2. Ensemble selon la revendication 1, **caractérisé en ce que** l'élément ressort (10) présente sensiblement la même longueur (L) que la première rainure (5).

3. Ensemble selon la revendication 1 ou 2, **caractérisé en ce que** l'élément ressort (10) peut être arrêté à une extrémité (10') dans la première rainure (5).

4. Ensemble selon la revendication 1, **caractérisé en ce que** la paroi (9) du deuxième bord latéral (II) s'étend en biseau vers l'intérieur au-dessous de la deuxième rainure (6).

5. Ensemble selon la revendication 4, **caractérisé en ce que** dans une première région (9a) en-dessous de la deuxième rainure (6) la paroi commence par repartir parallèlement à la paroi (13) au-dessus de la deuxième rainure (6).

6. Ensemble selon l'une ou plusieurs des revendications précédentes, **caractérisé en ce que** la paroi inférieure (15) de la deuxième rainure (6) s'étend inclinée de l'angle α par rapport à la face visible (3).

7. Ensemble selon la revendication 6, **caractérisé en ce que** l'angle α est dans une région allant de 2° à 5°.

8. Ensemble selon la revendication 7, **caractérisé en ce que** l'angle α vaut 3°.

9. Ensemble selon la revendication 1, **caractérisé en ce que** les panneaux de construction (1, 2) sont des panneaux de plancher comprenant une âme (14) en un matériau dérivé du bois ou un mélange matière synthétique- matériau dérivé du bois.
